# EUROPÄISCHE PATENTSCHRIFT

(11) **EP 4 399 140 B1**
(45) Veröffentlichungstag und Bekanntmachung des Hinweises auf die Patenterteilung: **17.06.2026**
(21) Anmeldenummer: 22777952.7
(22) Anmeldetag: 07.09.2022
(51) Int. Cl.: B62D 5/00, F16B 33/00

(54) **LENKEREINHEIT FÜR EIN STEER-BY-WIRE-LENKSYSTEM EINES KRAFTFAHRZEUGS**
STEERING UNIT FOR A STEER-BY-WIRE STEERING SYSTEM OF A MOTOR VEHICLE
UNITÉ DE DIRECTION POUR UN SYSTÈME DE DIRECTION STEER-BY-WIRE D'UN VÉHICULE AUTOMOBILE

(30) Priorität: 09.09.2021 DE 102021123383
(43) Veröffentlichungstag der Anmeldung: 17.07.2024
(73) Patentinhaber: Schaeffler Technologies AG & Co. KG, 91074 Herzogenaurach (DE); WILLI ELBE GELENKWELLEN GMBH & CO KG, 71732 Tamm (DE)
(72) Erfinder: RUH, Fabian, 91054 Erlangen (DE); SEDLMEIER, Ralf, 74385 Pleidelsheim (DE); HAUHOFF, Jörg, 72655 Altdorf (DE); HERRLICH, Thomas, 85521 Ottobrunn (DE); GERLACH, Thomas, 74189 Weinsberg (DE)
(74) Vertreter: Michalski Hüttermann & Partner mbB
(86) Internationale Anmeldenummer: PCT/EP2022/074779
(87) Internationale Veröffentlichungsnummer: WO 2023/036790

(56) Entgegenhaltungen:
- EP-A1- 3 620 350
- DE-A1- 10 017 049
- DE-A1- 102011 003 485
- DE-A1- 102014 209 646
- DE-A1- 102018 103 963
- DE-A1- 102020 128 101
- KR-A- 20210 021 712
- HIWIN GMBH, 11 December 2018 (2018-12-11), Retrieved from the Internet <URL:https://www.youtube.com/watch?v=yUc0JAkEkTk> [retrieved on 20250617]

## Beschreibung

Die Erfindung betrifft eine Lenkereinheit für ein Steer-by-wire-Lenksystem eines Kraftfahrzeugs, mit dessen Hilfe ein Drehwinkel komfortabel begrenzt werden kann.

Steer-by-Wire-Lenksysteme für Kraftfahrzeuge nehmen manuelle Lenkbefehle des Fahrers, wie konventionelle mechanische Lenkungen, durch eine Eingabeeinheit entgegen. Dies kann beispielsweise durch eine Drehung eines mit einer Lenkwelle einer Lenkereinheit drehfest verbunden Lenkrades erfolgen. Die Lenkwelle ist jedoch nicht notwendigerweise mechanisch über ein Lenkgetriebe mit den zu lenkenden Rädern verbunden, sondern kann mit Drehwinkel- beziehungsweise Drehmomentsensoren der zusammenwirken. Diese Sensoren erfassen den eingebrachten Lenkbefehl und geben ein daraus bestimmtes elektrisches Steuersignal an ein Radlenksystem ab, das mittels eines elektrischen Stellantriebs einen entsprechenden Lenkeinschlag der Räder einstellt.

Bei Steer-by-Wire-Lenksystemen erhält der Fahrer von den gelenkten Rädern keine unmittelbare physische Rückmeldung von den Rädern über den Lenkstrang an das Lenkrad. So ist bei einem rein mechanischen klassischen Lenksystem die maximale Anzahl der Lenkerradumdrehungen mechanisch festgelegt, da das Lenkrad nicht weitergedreht werden, wenn das Radlenksystem die Räder bis zu einem Anschlag gelenkt hat, der einen maximalen Lenkeinschlag definiert. Da bei einem Steer-by-Wire-Lenksystem ein mechanisches Anschlagen der Räder beim Erreichen des maximalen Lenkeinschlags nicht über eine unmittelbare mechanische Koppelung für den Fahrer haptisch wahrnehmbar ist, bei der Lenkereinheit für das Steer-by-wire-Lenksystem des Kraftfahrzeugs soll der maximale Lenkeinschlag durch eine mechanische Drehwinkelbegrenzung simuliert werden.

Aus DE 10 2018 103 963 A1 ist eine mechanische Drehwinkelbegrenzung für eine Lenkereinheit eines Steer-by-wire-Lenksystems in einem Kraftfahrzeug bekannt, bei dem eine mit einer Lenkerwelle eines Lenkrads verbundene Spindel eine aufgeschraubte Spindelmutter in axialer Richtung verlagert, wobei die Spindelmutter in ihren axialen Endlagen tangential an von mit der Spindel befestigten Scheiben ausgebildeten Endanschlägen anschlagen kann.

DE 100 17 049 A1 beschreibt eine gattungsgemäße Lenkereinheit.

Es besteht ein ständiges Bedürfnis eine Lenkereinheit für ein Steer-by-wire-Lenksystem eines Kraftfahrzeugs möglichst einfach und kostengünstig auszugestalten.

Es ist die Aufgabe der Erfindung Maßnahmen aufzuzeigen, die eine einfach und kostengünstig ausgestaltete Lenkereinheit für ein Steer-by-wire-Lenksystem eines Kraftfahrzeugs ermöglichen.

Die Lösung der Aufgabe erfolgt durch eine Lenkereinheit mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Eine Ausführungsform betrifft eine Lenkereinheit für ein Steer-by-wire-Lenksystem eines Kraftfahrzeugs, mit einer von einem Fahrer drehbaren Lenkwelle und einem mit der Lenkwelle zusammenwirkenden Spindeltrieb zur Begrenzung eines Lenkwinkels der Lenkwelle, wobei der Spindeltrieb eine Spindel und eine auf der Spindel aufgeschraubte Spindelmutter aufweist, wobei die Spindelmutter bei einer Drehung der Spindel relativ zur Spindel mit einem Bewegungsanteil in axialer Richtung verlagerbar ist, wobei die Spindelmutter einen ersten Spindelanschlag zum tangentialen Anschlagen an einen mit der Spindel bewegungsfest vorgesehenen ersten Endanschlag aufweist, wobei der erste Endanschlag einstückig mit der Spindel ausgestaltet ist.

Da eine mechanische Koppelung der Lenkereinheit mit Rädern des Kraftfahrzeugs über ein Lenkgetriebe bei einem Steer-by-wire-Lenksystem nicht erforderlich ist, ist es möglich die Lenkwelle im Vergleich zu einem rein mechanischen Lenksystem kürzer und kompakter auszugestalten. Dies ermöglicht es an einem freien Ende der Lenkwelle den Spindeltrieb aufzustecken und insbesondere über die Spindel mit der Lenkwelle zu verbinden. Die Verbindung des Spindeltrieb mit der Lenkwelle kann hierbei recht einfach erfolgen, da aufgrund der fehlenden mechanischen Koppelung mit den Rädern ein entsprechend geringerer Aufwand bei der Lagerung der Lenkwelle betrieben werden muss und nur wenige radial außerhalb die Lenkwelle umgebene Bauteile vorgesehen sind. Dies wiederum ermöglicht es den spindelseitigen ersten Endanschlag für die Begrenzung des maximalen Drehwinkels in einer ersten Drehrichtung einstückig mit der Spindel auszugestalten und eine separat ausgeführte und über eine separate Befestigungstechnik mit der Spindel befestigte Scheibe zur Ausbildung des ersten Endanschlags einzusparen. Die Bauteileanzahl ist dadurch reduziert und der Aufbau der Lenkereinheit vereinfacht, wodurch der Herstellungsaufwand und der Montageaufwand reduziert ist eine kostengünstige Herstellung der Lenkereinheit ermöglicht ist. Die Spindel kann mindestens eine schraubenförmig entlang einer axialen Längsrichtung der Spindel verlaufende Spindelnut aufweisen, über welche die Spindelmutter an der Spindel geführt und mit einem Bewegungsanteil in axialer Richtung verlagert werden kann. Je nach Ausgestaltung des Spindeltriebs, als Kugelgewindetrieb ausgestaltet, kann die Spindel durch ein Umformverfahren, insbesondere Pressen, mit dreidimensional geformten Formen und/oder eine spanende Bearbeitung bearbeitet werden, um die Spindelnut auszubilden, wobei der einstückig mit der Spindel ausgebildete erste Endanschlag bei der Ausbildung der Spindelnut mit erzeugt werden kann. Die in ihrer dreidimensionalen Gestalt aus einem Halbzeug hergestellte Spindel kann einschließlich ihrer Spindelnut und dem einstückigen ersten Endanschlag bei der sowieso vorgesehenen Bearbeitung kostengünstig und einfach hergestellt werden.

Die auf der Spindel mittelbar oder unmittelbar aufgeschraubte Spindelmutter kann bei einer Relativdrehung der Spindel zur Spindelmutter in axialer Richtung relativ zur Spindel verlagert werden. Vorzugsweise ist die Spindelmutter drehgesichert festgehalten, so dass die Spindelmutter ausschließlich in axialer Richtung bewegbar ist, während die drehbare Spindel in axialer Richtung unbeweglich ist. Wenn ein Fahrer das mit der Lenkwelle verbundene Lenkrad in eine erste Drehrichtung dreht, verdreht sich die Lenkwelle und die Spindel ebenfalls in die erste Drehrichtung, wodurch die Spindelmutter an der Spindel entlang in axialer Richtung auf den mit der Spindel mitdrehenden ersten Endanschlag zu bewegt wird, bis beim Erreichen des vordefinierten maximalen Lenkeinschlags der erste Spindelanschlag der Spindelmutter an dem ersten Endanschlag der Spindel in tangentialer Richtung anschlägt und ein haptisch fühlbares Erreichen des maximalen Lenkeinschlags an den Fahrer signalisiert werden kann. Durch das tangentiale Anschlagen des ersten Spindelanschlags der Spindelmutter an dem ersten Endanschlag der Spindel kann sich die Spindelmutter leicht von dem ersten Endanschlag lösen, wenn der mit der Lenkwelle verbundene Lenker in die entgegengesetzte zweite Drehrichtung gedreht wird. Ein Einklemmen des Endanschlags zwischen zwei Axialseiten ist vermieden, so dass eine gute Lenkbarkeit erhalten bleibt.

Da der erste Endanschlag einstückig mit der Spindel ausgestaltet ist und der erste Endanschlag sich in der von dem ersten Spindelanschlag weg weisenden Umfangsrichtung vergleichsweise lang erstrecken kann, kann der erste Endanschlag vergleichsweise hohe Kräfte abtragen. Dies ermöglicht es den ersten Endanschlag auf einem vergleichsweise großen Radiusbereich vorzusehen, so dass sich für den an dem ersten Spindelanschlag der Spindelmutter anschlagenden ersten Endanschlag der Spindel ein vergleichsweise großer Hebelarm mit einer entsprechend großen Kraftübersetzung ergeben kann. Trotz einer besonders leichtgängigen Lenkwelle kann beim Erreichen des maximale Lenkeinschlag eine vergleichsweise hohe Gegenkraft bereitgestellt werden, die bei einer besonders klein bauenden Lenkereinheit eine gute haptische Simulation einer rein mechanischen Lenkereinheit bereitstellen kann. Bezogen auf einen Durchmesser d der Lenkwelle innerhalb der Spindel kann eine mittlerer Durchmesser D der beim Erreichen des maximalen Lenkeinschlags aneinander anliegenden Kontaktflächen zwischen dem ersten Endanschlag und dem ersten Spindelanschlag 1,10 ≤ D/d ≤ 2,50, insbesondere 1,30 ≤ D/d ≤ 2,25, vorzugsweise 1,50 ≤ D/d ≤ 2,00 und besonders bevorzugt D/d = 1,85 ± 0,05 betragen.

Insbesondere ist zu dem ersten Endanschlag axial beanstandet ein separat zur Spindel ausgeführter zweiter Endanschlag drehfest mit der Spindel befestigt. Ausgehend von einer neutralen Mittelstellung, die insbesondere einer Geradeausfahrt des Kraftfahrzeugs entspricht, kann der maximale Lenkeinschlag in der ersten Drehrichtung des Lenkrads und der mit dem Lenkrad gekoppelten Lenkwelle durch den ersten Endanschlag und in der entgegengesetzten zweiten Drehrichtung durch den zweiten Endanschlag begrenzt sein. Vorzugsweise ist der maximale Drehwinkel der Lenkwelle ausgehend von der neutralen Mittelstellung in die erste Drehrichtung im Wesentlichen genauso groß wie der maximale Drehwinkel der Lenkwelle ausgehend von der neutralen Mittelstellung in die zweite Drehrichtung. Der erste Endanschlag kann an der Spindelmutter beim Erreichen des maximalen Lenkeinschlags in der zweiten Drehrichtung formschlüssig, insbesondere tangential, anschlagen. Die Spindelmutter ist vorzugsweise zwischen dem ersten Endanschlag und dem zweiten Endanschlag verliersicher aufgenommen, so dass ein maximaler Verlagerungsweg der Spindelmutter in axialer Richtung durch den ersten Endanschlag und den zweiten Endanschlag vorgegeben und begrenzt sein kann. Durch den axialen Abstand des separat mit der Spindel befestigten zweiten Endanschlags zu dem einstückig mit der Spindel ausgeführten ersten Endanschlag kann der maximale Lenkwinkel eingestellt und mit Hilfe der gleichen Lenkereinheit für verschieden maximale Lenkwinkel verschiedener Steer-by-wire-Lenksysteme verwendet werden. Die Anzahl an Gleichteile kann über verschiedene Modellvarianten eines Kraftfahrzeugs hinweg erhöht werden, wodurch die Herstellungs- und Lagerkosten gesenkt werden können. Beispielsweise weisen der erste Endanschlag und den zweiten Endanschlag einen axialen Abstand auf, der für den Spindeltrieb einen maximale Gesamtlenkwinkel von 270° bis 1080°, insbesondere 540°bis 1035°, vorzugsweise 540° bis 810° und besonders bevorzugt 540° bis 630° vorgibt.

Vorzugsweise ist der zweite Endanschlag Teil eines auf der Spindel aufgesteckten und mit der Spindel drehfest befestigten Anschlagrings. Der Anschlagring kann an dem von dem ersten Anschlag weg weisenden axialen Ende auf die Spindel und/oder die Lenkwelle aufgesteckt sein. Der Anschlagring kann an dem von dem ersten Endanschlag weg weisenden axialen Ende auf die Spindel und/oder die Lenkwelle aufgesteckt und radial außerhalb zu der Spindel an der Spindel befestigt sein. Die Montage des Spindeltriebs innerhalb der Lenkereinheit kann bei einer geringen Bauteileanzahl und dem einstückig von der übrigen Spindel abstehenden ersten Endanschlag leicht und schnell erfolgen. Da der Anschlagring auf der Spindel aufgesteckt ist, braucht an der Lenkwelle keine zur Befestigung des Anschlagrings vorgesehene Befestigungstechnik vorgesehen sein. Stattdessen kann die Befestigungstechnik für den Anschlagring ausschließlich in dem Spindeltrieb vorgesehen sein. Der Anschlagring kann insbesondere mit Presspassung auf die Spindel aufgepresst sein. Dies ermöglicht es von dem Anschlagring eine Kraft in radialer Richtung aufzuprägen, mit deren Hilfe eine Befestigung der Spindel mit der Lenkwelle unterstützt werden kann. Anstatt für die Befestigung des Anschlagrings die Festigkeit der Lenkwelle zu beeinträchtigen kann der auf der Spindel aufgesteckte Anschlagring die Stabilität und Festigkeit der Lenkwelle und der Lenkereinheit sogar verbessern.

Besonders vorteilhaft ist es, wenn der erste Endanschlag einstückig mit der Spindel ausgebildet vorgesehen ist, und wenn der zweite Endanschlag nicht einstückig mit der Spindel und/oder separat von der Spindel vorgesehen ist. Vorteilhaft ist es, wenn nur an einem Ende der Spindel ein einstückig mit der Spindel ausgestalteter Endanschlag vorgesehen ist, also wenn nur der erste Endanschlag einstückig mit der Spindel ausgebildet ist und/oder kein anderer/zweiter Endanschlag einstückig mit der Spindel ausgebildet ist. Insofern wird erreicht, dass zumindest der erste Endanschlag eine große Festigkeit, eine Unverlierbarkeit und eine kompakte Bauweise bereitstellt, und dass der zweite Endanschlag für die Montierbarkeit der Lenkereinheit auch auf beengtem Bauraum sorgt. Denn dank des separaten bzw. nicht einstückig mit der Spindel ausgebildeten Endanschlags kann die Spindelmutter problemlos möglichst kollisionsfrei aufgeschraubt werden.

Der erste Endanschlag kann radial, insbesondere nach außen, von der Spindel vorstehen. Der erste Endanschlag kann gegenüber einer Kugel eines Kugelgewindetriebs der Lenkereinheit und/oder eines Gangs für eine Kugel eines Kugelgewindetriebs der Lenkereinheit radial, insbesondere nach außen, vorstehen. So wird erreicht, dass die Spindelmutter nicht oder nur unwesentlich radial, insbesondere nach innen, vorstehen muss, damit der Endanschlag tangential anschlagen kann. Die Spindelmutter sollte lediglich tangential vorstehen. So kann die Spindelmutter kompakter ausgestaltet werden und gegenüberliegend von dem ersten Endanschlag auf die Spindel aufgeschoben werden.

Der Spindelanschlag, insbesondere ein/der erste Spindelanschlag und/oder ein/der zweite(r) Spindelanschlag, kann einstückig mit der Spindelmutter und/oder mit einem die Spindel wenigstens teilweise radial umfassenden Abschnitt/Teil der Spindelmutter ausgebildet sein. Der Spindelanschlag kann für das tangentiale Anschlagen axial an der Spindelmutter vorstehen.

Bevorzugt ist der Anschlagring formschlüssig gegen eine Relativdrehung zur Spindel an der Spindel drehgesichert, vorzugsweise wobei der Anschlagring relativ zur Spindel axial verschiebbar ist und vorzugsweise eine axiale Verschiebbarkeit des Anschlagring relativ zur Spindel durch ein mit der Spindel oder mit der Lenkwelle verbundenes Sicherungselement, insbesondere Sicherungsring, und einem von der Spindel ausgebildeten Absatz begrenzt und/oder minimiert ist. Besonders bevorzugt ist der Anschlagring formschlüssig gegen eine Relativdrehung zur Spindel an der Spindel drehgesichert, wobei der Anschlagring relativ zur Spindel axial verschiebbar ist und eine axiale Verschiebbarkeit des Anschlagring relativ zur Spindel durch ein mit der Spindel oder mit der Lenkwelle verbundenes Sicherungselement, insbesondere Sicherungsring, und einem von der Spindel ausgebildeten Absatz begrenzt und/oder minimiert ist. Der Anschlagring kann beispielsweise über eine Steckverzahnung und/oder eine Welle/Nabe-Verbindung drehgesichert an der Spindel abgestützt ein. Der Anschlagring muss jedoch nicht in Umfangsrichtung spielfrei verklemmt sein, da beim Erreichen des maximalen Lenkeinschlags ja sowieso ein merkliches Feedback erzeugt werden soll, was durch ein hörbares Anschlaggeräusch ja sogar unterstützt und in dieser speziellen Situation auch nicht als unkomfortabel empfunden wird. Alternativ kann das Anschlaggeräusch durch ein zwischen dem Anschlagring und Spindel vorgesehenes Dämpferelement, insbesondere ein elastomeres Material, gedämpft werden. Durch die grundsätzliche axiale Verschiebbarkeit kann der Anschlagring leicht durch eine axiale Relativbewegung zur Spindel drehgesichert auf eine korrespondierende Außenkontur der Spindel aufgesteckt werden. Eine Aufstecktiefe des Anschlagrings kann leicht durch einen an der Außenkontur der Spindel ausgebildeten Absatz, der für den Anschlagring einen Axialanschlag ausbilden kann, begrenzt werden. Ein Abfallen des Anschlagrings von der Spindel in eine entgegen der Aufsteckrichtung gerichtete Axialrichtung kann leicht durch einen in eine Nut der Spindel oder der Lenkwelle eingesetzten Sicherungsring verhindert werden. Vorzugsweise ist der Sicherungsring in der Lenkwelle eingesetzt und kann sowohl eine axiale Relativbewegung des Anschlagrings relativ zur Lenkwelle als auch eine axiale Relativbewegung der Spindel relativ zur Lenkwelle blockieren und einen entsprechenden Axialanschlag ausbilden.

Insbesondere weist die Spindelmutter einen zu dem ersten Spindelanschlag axial beabstandeten zweiten Spindelanschlag zum tangentialen Anschlagen an einer/dem bewegungsfest mit der Spindel vorgesehenen zweiten Endanschlag auf. Da der mit dem ersten Endanschlag zusammenwirkende erste Spindelanschlag und der mit dem zweiten Endanschlag zusammenwirkende zweite Spindelanschlag in axialer Richtung zueinander beabstandet sind, ist es einfach möglich in dem axialen Zwischenraum zwischen dem ersten Spindelanschlag und dem zweiten Spindelanschlag eine Führung und/oder Koppelung der Spindelmutter mit der Spindel auszubilden, die insbesondere bezüglich Reibung und/oder Reibungsschwankungen optimiert sein kann. Es ist nicht erforderlich den selben Spindelanschlag der Spindelmutter für ein tangentiales Anschlagen sowohl an dem ersten Endanschlag als auch an dem zweiten Endanschlag zu verwenden. Beispielsweise kann die Spindelmutter an ihren axialen Stirnseiten jeweils einen in axialer Richtung abstehende Ansatz aufweisen, der jeweils an einer in tangentialer Richtung weisenden Seitenfläche den jeweiligen Spindelanschlag ausbildet. Der in axialer Richtung abstehende Ansatz kann sich an der von dem jeweiligen Spindelanschlag weg weisenden Umfangsrichtung, beispielsweise rampenförmig, weiter erstrecken und auf zu dem Spindelanschlag in axialer Richtung versetzt in die axiale Stirnseite der übrigen Spindelmutter übergehen, so dass über den jeweiligen Spindelanschlag auch hohe Aufprallkräfte ohne signifikante plastische Verformung des Spindelanschlags abgetragen werden können.

Erfindungsgemäß ist der Spindeltrieb als Kugelgewindetrieb ausgestaltet, wobei die Spindelmutter über mindestens eine Kugel an der Spindel geführt ist. Der Kugelgewindetrieb, der auch als Kugelumlaufspindel bezeichnet wird, kann mit Hilfe in Nuten der Spindel und der Spindelmutter geführten Kugeln mit einem zu einem Kugellager vergleichbaren Lauf- und Reibungseigenschaften eine schraubenförmige Führung der Spindelmutter an der Spindel vergleichbar zu einem Linearkugellager bereitstellen. Dies führt zu eine guten Leichtgängigkeit der Lenkwelle mit einer besonders geringen Reibung im Bereich des eine Drehwinkelbegrenzung bereitstellenden Spindeltriebs. Eine Beeinträchtigung des Lenkgefühls durch den Spindeltrieb kann dadurch vermieden sein.

Die Spindelmutter weist mindestens zwei Gänge zur Führung an Kugeln des Kugelgewindetrieb auf. Die Spindelmutter weist mindestens eine Kugelumlenkung zur Rückführung von aus einem Gang ankommenden Kugeln in den selben Gang oder einen verschiedenen Gang aufweist.

Die je nach Drehstellung der Spindelmutter relativ zur Spindel nicht mehr benötigte Kugel kann dadurch nach dem Passieren der Kugelumlenkung wiederverwendet werden. Wenn die Kugelumlenkung in den selben Gang zurückführt können redundante Führungen der Spindelmutter an der Spindel ausgebildet werden, die auch bei einer Beschädigung oder einem Bauteilversagen in einem der Gänge noch Lenkbewegungen über die Führung des anderen Gangs ermöglichen. Wenn die Kugelumlenkung in einen anderen Gang führt, lassen sich die Belastungen der Kugeln bei starken Lenkeinschlägen gleichmäßiger verteilen, so dass vorzeitige Verschleißerscheinungen vermieden werden können.

Insbesondere ist die Spindelmutter an einer, insbesondere feststehenden, Führung drehgesichert. Ein Mitdrehen der Spindelmutter bei einem Drehen der Lenkwelle durch einen vom Fahrer am Lenkrad eingeleiteten Lenkeinschlag kann dadurch sicher vermieden werden. Hierzu kann die Spindelmutter formschlüssig in axialer Richtung parallel zur Drehachse der Spindel linear geführt sein, beispielsweise durch eine Feder/Nut-Verbindung mit Spielpassung.

Vorzugsweise ist die Spindelmutter formschlüssig direkt an der Führung drehgesichert. Beispielsweise weist Spindelmutter eine einstückig mit der Spindelmutter ausgebildete Führungslasche auf, die in einem korrespondierenden Schlitz der feststehenden Führung in axialer Richtung linear geführt ist. Es ist aber auch möglich, dass die feststehende Führung mindestens eine abstehende Rippe aufweist, die in einer Nut der Spindelmutter in axialer Richtung linear geführt ist. Beispielsweise sind mehrere, beispielsweise zwei bis fünf, Rippen vorgesehen. Die Bauteleanzahl ist dadurch gering gehalten.

In einer weiteren Ausführungsform ist die Spindelmutter über genau eine oder mindestens zwei, insbesondere als Nadel ausgestaltete, Passfeder indirekt an der Führung drehgesichert. Die Spindelmutter und die feststehende Führung können jeweils eine, insbesondere in axialer Richtung durchgängige, Nut aufweisen, in welche die Passfeder eingesteckt werden kann und/oder eingesteckt sein kann. Dadurch kann bei der Montage eine Relativdrehung der Spindelmutter zu der Führung zugelassen werden, die erst mit dem Einsetzen der mindestens einen Passfeder beendet wird. Nach dem Einsetzen und/oder durch das Vorhandensein der Passfeder ist eine Drehsicherung der Spindelmutter an der Führung ausgebildet. Die Montage der Spindelmutter ist dadurch vereinfacht, wenn die Führung bereits eingebaut sein sollte.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Prinzipdarstellung einer Lenkereinheit,
Fig. 2: eine schematische perspektivische Ansicht eines Spindeltriebs für die Lenkereinheit aus Fig. 1 in einer ersten Stellung,
Fig. 3: eine schematische perspektivische Ansicht des Spindeltriebs aus Fig. 2 in einer zweiten Stellung,
Fig. 4: eine schematische perspektivische Ansicht des Spindeltriebs aus Fig. 2 in einer dritten Stellung und
Fig. 5: eine schematische Schnittansicht des Spindeltriebs aus Fig. 2.

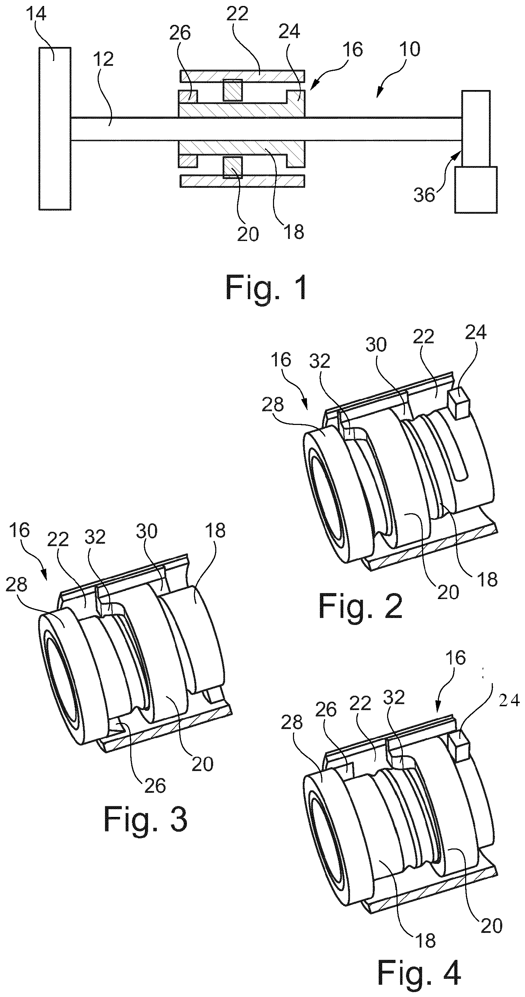

Die in Fig. 1 dargestellte Lenkereinheit 10 kann für ein Steer-by-wire-Lenksystem eines Kraftfahrzeugs verwendet werden. Die Lenkereinheit 10 kann ein mit einer Lenkwelle 12 gekoppeltes, insbesondere drehfest befestigtes, Lenkrad 14 aufweisen, das ein Fahrer für eine Kurvenfahrt aus einer neutralen Mittelstellung, die einer Geradeausfahrt entspricht, verdrehen kann. Die Lenkwelle 12 kann mit einem Aktuator 36 interagieren, der ein aktives Feedback an den Fahrer bereitstellen kann. Der Aktuator kann einen Motor zur Bereitstellung eines Drehmoments, gegebenenfalls ein zwischengeschaltetes Getriebe und/oder eine Sensorik 36 aufweisen, die beispielsweise einen Drehwinkel, ein Drehmoment, eine Drehwinkelbeschleunigung detektiert, um auf Basis dieser detektierten Messwerte einen Lenkeinschlag von Rädern des Kraftfahrzeugs zu veranlassen und/oder ein aktives Feedback bereitzustellen. Mit der Lenkwelle 12 ist ein Spindeltrieb 16 gekoppelt, der eine mit der Lenkwelle 12 drehfest befestigte und als Hohlwelle ausgestaltete Spindel 18 und eine auf die Spindel 18 aufgeschraubte und an der Spindel 18 in axialer Richtung geführte Spindelmutter 20 aufweist. Die Spindelmutter 20 ist an einer feststehenden Führung 22 formschlüssig drehgesichert und in axialer Richtung relativ bewegbar linear geführt. Wenn die Spindel 18 sich bei einer Drehung des Lenkrads 14 und der Lenkwelle 12 mitdreht, dann die Drehbewegung der Spindel 18 in eine axiale Linearbewegung der Spindelmutter 20 übersetzt werden. Die maximale axiale Relativbewegung der Spindelmutter 20 und damit ein maximaler Drehwinkel der Lenkwelle 12 kann durch ein Anschlagen der Spindelmutter 20 an einem einstückig mit der Spindel 18 ausgeführten ersten Endanschlag 24 und einem separat ausgeführten und mit der Spindel drehfest befestigten zweiten Endanschlag 26 begrenzt werden.

Wie in Fig. 2 bis 4 dargestellt ist, kann der zweite Endanschlag 26 Teil eines auf die Spindel 18 aufgesteckten Anschlagrings 28 sein, der als separates Bauteil mit der Spindel 18 drehfest befestigt sein kann. Wie in Fig. 3 dargestellt ist, kann die Spindelmutter 20 einen ersten Spindelanschlag 30 aufweisen, der an dem ersten Endanschlag 24 anschlagen kann, wie in Fig. 4 dargestellt ist. Zudem kann die Spindelmutter 20 einen zweiten Spindelanschlag 32 aufweisen, der an dem zweiten Endanschlag 26 anschlagen kann, wie in Fig. 2 bis 4 dargestellt ist. Der Spindeltrieb 16 ist insbesondere als reibungsarmer Kugelgewindetrieb ausgestaltet.

Erfindungsgemäß ist die Spindelmutter 20 über mindestens eine Kugel an der Spindel 18 geführt. Erfindungsgemäß weist die Spindelmutter 20 mindestens zwei Gänge zur Führung an Kugeln des Kugelgewindetriebs auf. Erfindungsgemäß weist die Spindelmutter 20 mindestens zwei Gänge zur Führung an Kugeln des Kugelgewindetriebs auf, wobei die Spindelmutter 20 mindestens eine Kugelumlenkung zur Rückführung von aus einem Gang ankommenden Kugeln in den selben Gang oder einen verschiedenen Gang aufweist.

Der erste Endanschlag 24 und/oder der zweite Endanschlag 26 steht insbesondere radial nach außen an der Spindel 18 von der Spindel 18 vor. Der erste Endanschlag 24 und/oder der zweite Endanschlag 26 überragt einen Gang für eine Kugel des Kugelgewindetriebs der Lenkereinheit 10 in radialer Richtung und/oder nach außen.

Der erste Endanschlag 24 ist einstückig mit der Spindel 18 ausgebildet. Der zweite Endanschlag 26 ist nicht einstückig mit der Spindel 18 und/oder separat von der Spindel vorgesehen. Insbesondere ist nur an einem Ende der Spindel 18 (rechts in Fig. 2 bis 4) ein einstückig mit der Spindel 18 ausgestalteter Endanschlag 24 vorgesehen. Es ist kein weiterer Endanschlag 24, 26 einstückig mit der Spindel 18 ausgestaltet.

Insbesondere ist der erste Spindelanschlag 30 und/oder der zweite Spindelanschlag 32 einstückig mit einem die Spindel 18 radial umfassenden Abschnitt/Teil der Spindelmutter 20 ausgebildet.

Der erste Spindelanschlag 30 und/oder der zweite Spindelanschlag 32 steht für ein tangentiales Anschlagen am ersten Endanschlag 24 und/oder am zweiten Endanschlag 26 axial an der Spindelmutter 20 vor.

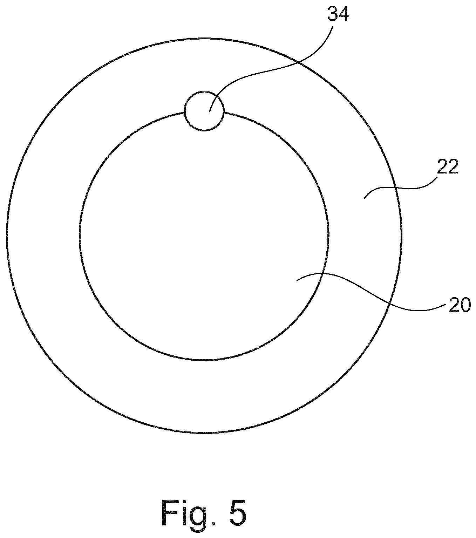

Wie in Fig. 5 dargestellt ist, kann die Spindelmutter 20 an der Führung 22 über eine Feder/Nut-Verbindung drehgesichert, aber axial relativ verschiebbar geführt sein. Im dargestellten Ausführungsbeispiel ist die Passfeder der Feder/Nut-Verbindung als Nadel 34 ausgeführt.

### Bezugszeichenliste

- 10: Lenkereinheit
- 12: Lenkwelle
- 14: Lenkrad
- 16: Spindeltrieb
- 18: Spindel
- 20: Spindelmutter
- 22: Führung
- 24: erster Endanschlag
- 26: zweiter Endanschlag
- 28: Anschlagring
- 30: erster Spindelanschlag
- 32: zweiter Spindelanschlag
- 34: Nadel
- 36: Aktuator

## Patentansprüche

1. Lenkereinheit für ein Steer-by-wire-Lenksystem eines Kraftfahrzeugs, mit einer von einem Fahrer drehbaren Lenkwelle (12) und
einem mit der Lenkwelle (12) zusammenwirkenden Spindeltrieb (16) zur Begrenzung eines Lenkwinkels der Lenkwelle (12),
wobei der Spindeltrieb (16) eine Spindel (18) und eine auf der Spindel (18) aufgeschraubte Spindelmutter (20) aufweist, wobei die Spindelmutter (20) bei einer Drehung der Spindel (18) relativ zur Spindelmutter (20) mit einem Bewegungsanteil in axialer Richtung verlagerbar ist,
wobei die Spindelmutter (20) einen ersten Spindelanschlag (30) zum tangentialen Anschlagen an einen mit der Spindel (18) bewegungsfest vorgesehenen ersten Endanschlag (24) aufweist,
wobei der erste Endanschlag (24) einstückig mit der Spindel (18) ausgestaltet ist, **dadurch gekennzeichnet, dass**
der Spindeltrieb (16) als Kugelgewindetrieb ausgestaltet ist, wobei die Spindelmutter (20) über mindestens eine Kugel an der Spindel (18) geführt ist, und
die Spindelmutter (20) mindestens zwei Gänge zur Führung an Kugeln des Kugelgewindetrieb aufweist, wobei die Spindelmutter (20) mindestens eine Kugelumlenkung zur Rückführung von aus einem Gang ankommenden Kugeln in den selben Gang oder einen verschiedenen Gang aufweist.

2. Lenkereinheit nach Anspruch 1 und **dadurch gekennzeichnet, dass** zu dem ersten Endanschlag (24) axial beanstandet ein separat zur Spindel (18) ausgeführter zweiter Endanschlag (26) drehfest mit der Spindel (18) befestigt ist.

3. Lenkereinheit nach Anspruch 2 und **dadurch gekennzeichnet, dass** der zweite Endanschlag (26) Teil eines auf der Spindel (18) aufgesteckten und mit der Spindel (18) drehfest befestigten Anschlagrings (28) ist.

4. Lenkereinheit nach Anspruch 3 und **dadurch gekennzeichnet, dass** der Anschlagring (28) formschlüssig gegen eine Relativdrehung zur Spindel (18) an der Spindel (18) drehgesichert ist, wobei der Anschlagring (28) relativ zur Spindel (18) axial verschiebbar ist und eine axiale Verschiebbarkeit des Anschlagring (28) relativ zur Spindel durch ein mit der Spindel (18) oder mit der Lenkwelle (12) verbundenes Sicherungselement, insbesondere Sicherungsring, und einem von der Spindel (18) ausgebildeten Absatz begrenzt und/oder minimiert ist.

5. Lenkereinheit nach einem der Ansprüche 1 bis 4 und **dadurch gekennzeichnet, dass** die Spindelmutter (20) einen zu dem ersten Spindelanschlag (30) axial beabstandeten zweiten Spindelanschlag (32) zum tangentialen Anschlagen an einer/dem bewegungsfest mit der Spindel (18) vorgesehenen zweiten Endanschlag (26) aufweist.

6. Lenkereinheit nach einem der Ansprüche 1 bis 5 und **dadurch gekennzeichnet, dass** die Spindelmutter (20) an einer, insbesondere feststehenden, Führung (22) drehgesichert ist.

7. Lenkereinheit nach Anspruch 6 und **dadurch gekennzeichnet, dass** die Spindelmutter (20) formschlüssig direkt an der Führung (22) drehgesichert ist.

8. Lenkereinheit nach einem der Ansprüche 1 bis 7 und **dadurch gekennzeichnet, dass** die Spindelmutter (20) über Kugeln an der Spindel (18) geführt ist.

9. Lenkereinheit nach einem der Ansprüche 1 bis 8 und **dadurch gekennzeichnet, dass** die Spindelmutter (20) über genau eine oder mindestens zwei, insbesondere als Nadel (34) ausgestaltete, Passfeder indirekt an der Führung (22) drehgesichert ist.

## Claims

1. Steering unit for a steer-by-wire steering system of a motor vehicle, comprising a steering shaft (12) rotatable by a driver and
a spindle drive (16) interacting with the steering shaft (12) for limiting a steering angle of the steering shaft (12),
wherein the spindle drive (16) has a spindle (18) and a spindle nut (20) screwed onto the spindle (18), wherein the spindle nut (20) can be displaced in the axial direction with a movement component when the spindle (18) is rotated relative to the spindle nut (20),
wherein the spindle nut (20) has a first spindle stop (30) for tangentially abutting against a first end stop (24) provided with the spindle (18) in a movement-proof manner,
wherein the first end stop (24) is configured integrally with the spindle (18), **characterised in that** the spindle drive (16) is configured as a ball screw drive, wherein the spindle nut (20) is guided on the spindle (18) via at least one ball, and
the spindle nut (20) has at least two tracks for guidance on balls of the ball screw drive, wherein the spindle nut (20) has at least one ball deflector for returning balls arriving from one track to the same track, or to a different track.

2. Steering unit according to claim 1 and **characterised in that** a second end stop (26), which is designed separately from the spindle (18), is fastened to the spindle (18) in a rotationally fixed manner at an axial distance from the first end stop (24).

3. Steering unit according to claim 2 and **characterised in that** the second end stop (26) is part of a stop ring (28) mounted on the spindle (18) and fastened to the spindle (18) in a rotationally fixed manner.

4. Steering unit according to claim 3 and **characterised in that** the stop ring (28) is secured against rotation on the spindle (18) in a form-fitting manner against a rotation relative to the spindle (18), wherein the stop ring (28) is axially displaceable relative to the spindle (18) and an axial displaceability of the stop ring (28) relative to the spindle is limited and/or minimised by a securing element, in particular a securing ring, connected to the spindle (18) or to the steering shaft (12), and a shoulder formed by the spindle (18).

5. Steering unit according to any of claims 1 to 4 and **characterised in that** the spindle nut (20) has a second spindle stop (32), which is axially spaced apart from the first spindle stop (30), for tangentially abutting against a/the second end stop (26) provided with the spindle (18) fixedly.

6. Steering unit according to any of claims 1 to 5 and **characterised in that** the spindle nut (20) is secured against rotation on an, in particular fixed, guide (22).

7. Steering unit according to claim 6 and **characterised in that** the spindle nut (20) is secured against rotation in a form-fitting manner directly on the guide (22).

8. Steering unit according to any of claims 1 to 7 and **characterised in that** the spindle nut (20) is guided on the spindle (18) via balls.

9. Steering unit according to any of claims 1 to 8 and **characterised in that** the spindle nut (20) is secured against rotation indirectly on the guide (22) via exactly one or at least two feather keys, in particular in the form of a needle (34).

## Revendications

1. Unité de direction pour un système de direction steer-by-wire d'un véhicule automobile, avec un arbre de direction (12) pouvant être tourné par un conducteur et
un entraînement à vis (16) coopérant avec l'arbre de direction (12) pour limiter un angle de braquage de l'arbre de direction (12),
dans laquelle l'entraînement à vis (16) comporte une vis (18) et un écrou de vis (20) vissé sur la vis (18), l'écrou de vis (20) pouvant être déplacé dans la direction axiale avec une composante de mouvement lors d'une rotation de la vis (18) par rapport à l'écrou de vis (20),
dans laquelle l'écrou de vis (20) présente une première butée de vis (30) venant en butée tangentielle contre une première butée de fin de course (24) prévue de manière à être solidaire en mouvement avec la vis (18),
dans laquelle la première butée de fin de course (24) est réalisée d'une seule pièce avec la vis (18), **caractérisée en ce que** l'entraînement à vis (16) est conçu sous la forme d'un entraînement à vis à billes, l'écrou de vis (20) étant guidé sur la vis (18) par au moins une bille, et **en ce que** l'écrou de vis (20) comporte au moins deux filets pour le guidage sur les billes de l'entraînement à vis à billes, l'écrou de vis (20) présentant au moins un système à recirculation de billes pour la recirculation des billes provenant d'un filet vers ce même filet ou vers un filet différent.

2. Unité de direction selon la revendication 1 et **caractérisée en ce qu'**une seconde butée de fin de course (26) réalisée séparément de la vis (18) est fixée à la vis (18) de manière à être solidaire en rotation avec elle et disposée axialement à distance de la première butée de fin de course (24).

3. Unité de direction selon la revendication 2 et **caractérisée en ce que** la seconde butée de fin de course (26) fait partie d'une bague de butée (28) enfichée sur la vis (18) et fixée de manière à être solidaire en rotation avec la vis (18).

4. Unité de direction selon la revendication 3 et **caractérisée en ce que** la bague de butée (28) est bloquée en rotation contre une rotation relative par rapport à la vis (18) par complémentarité de forme avec la vis (18), la bague de butée (28) pouvant être déplacée axialement par rapport à la vis (18) et **en ce que** la possibilité de déplacement axial de la bague de butée (28) par rapport à la vis est limitée et/ou minimisée par un élément de retenue relié à la vis (18) ou à l'arbre de direction (12), en particulier une bague de retenue, et un épaulement formé par la vis (18).

5. Unité de direction selon l'une quelconque des revendications 1 à 4 et **caractérisée en ce que** l'écrou de vis (20) présente une seconde butée de vis (32) disposée axialement à distance de la première butée de vis (30) venant en butée tangentielle contre une/la seconde butée de fin de course (26) prévue de manière à être solidaire en mouvement avec la vis (18).

6. Unité de direction selon l'une quelconque des revendications 1 à 5 et **caractérisée en ce que** l'écrou de vis (20) est bloqué en rotation sur un guidage (22), en particulier un guidage fixe.

7. Unité de direction selon la revendication 6 et **caractérisée en ce que** l'écrou de vis (20) est bloqué en rotation par complémentarité de forme directement sur le guidage (22).

8. Unité de direction selon l'une quelconque des revendications 1 à 7 et **caractérisée en ce que** l'écrou de vis (20) est guidé sur la vis (18) par des billes.

9. Unité de direction selon l'une quelconque des revendications 1 à 8 et **caractérisée en ce que** l'écrou de vis (20) est indirectement bloqué en rotation sur le guidage (22) par l'intermédiaire d'exactement un ou d'au moins deux clavettes, en particulier réalisées sous la forme d'une goupille (34).
